# EUROPÄISCHE PATENTANMELDUNG

(11) **EP 1 522 770 A1**
(43) Veröffentlichungstag der Anmeldung: **13.04.2005**
(21) Anmeldenummer: 04020845.6
(22) Anmeldetag: 02.09.2004
(51) Int. Cl.: F16J 15/08, F16J 15/12

(54) **Dichtung**

(30) Priorität: 07.10.2003 DE 10346429
(71) Anmelder: Bayerische Motoren Werke Aktiengesellschaft, 80809 München (DE)
(72) Erfinder: Streck, Günter, 80995 München (DE); Schmidmayer, Christine, 85457 Wörth (DE)

(57) **Zusammenfassung**

Dichtung (1), insbesondere eine Zylinderkopfdichtung für eine Brennkraftmaschine, bestehend aus zumindest zwei Metalllagen (2, 2') und einem, den radial außen liegenden Randbereich (2, 2") einer Metallage (2, 2') abschirmenden Abschirmelement (3), wobei das Abschirmelement (3) am Randbereich (2") zumindest einer Metalllage (2, 2') angeordnet ist.

Durch die erfindungsgemäße Ausgestaltung der Dichtung wird sowohl einer Spaltkorrosion als auch einer Kontaktkorrosion des Maschinengehäuses, das beispielsweise aus einer Magnesiumlegierung gefertigt ist, vorgebeugt.

## Beschreibung

Die Erfindung betrifft eine Dichtung gemäß der Merkmale im Oberbegriff des Patentanspruchs 1.

Sie geht von der deutschen Offenlegungsschrift DE 101 25 091 A1 aus. In dieser ist eine Flachdichtung, insbesondere eine Zylinderkopfdichtung für Brennkraftmaschinen beschrieben, die aufgrund der Materialpaarung der abzudichtenden Bauteile, sowie der Flachdichtung selbst eine hohe Potentialdifferenz bezüglich der elektrochemischen Spannungsreihe aufweisen. Die Flachdichtung beinhaltet mindestens eine, insbesondere aus Federstahl bestehende metallische Funktionslage, die in Wirkverbindung mit einem den Potentialunterschied der Materialien reduzierenden Isolator steht, wobei die Flachdichtung zumindest im Bereich eines der abzudichtenden Bauteile mit einem, eine Schutzlage bildenden flächenförmig ausgebildeten Isolator versehen ist, der zumindest im Bereich der umlaufenden äußeren Schnittkanten der Funktionslage mit einem Abschirmelement versehen ist. Diese Flachdichtung ist insbesondere zur Dichtung eines Magnesium-Kurbelgehäuses gegen einen Aluminium-Zylinderkopf vorgesehen. Durch die beschriebene Ausgestaltung wird eine Kontaktkorrosion zwischen der metallischen Funktionslage aus Federstahl sowie dem Magnesium-Kurbelgehäuse vermieden. Zusätzlich zu dem flächenförmig ausgebildeten Isolator verfügt die Flachdichtung über einen an den Isolator angespritzten erhabenen Bereich, der in Einbaulage der Flachdichtung den beim Zusammenbau der Maschinengehäuse entstehenden Spalt sicher abdichtet, um das Eindringen von Elektrolyten zu verhindern. Diese Maßnahme hilft der Vermeidung einer Spaltkorrosion.

Nachteilig bei der beschriebenen Ausgestaltung ist der relativ hohe bauliche Aufwand der nötig ist, um den zusätzlichen flächenförmigen Isolator als Dichtelement in die Flachdichtung zu integrieren.

Aufgabe der vorliegenden Erfindung ist es, die Herstellung einer gattungsgemäßen Dichtung zu vereinfachen.

Diese Aufgabe wird durch das Merkmal im kennzeichnenden Teil des Patentanspruchs 1 gelöst.
Durch die erfindungsgemäße Ausgestaltung kann der Isolator in Form einer zusätzlichen Schutzlage entfallen, wodurch der bauliche Aufwand verringert und die Herstellung vereinfacht wird. Beim Setzverhalten der Dichtung muss darüber hinaus keine zusätzliche Isölatorschicht berücksichtigt werden, wodurch die Dimensionierung der Dichtung wesentlich vereinfacht wird.

Gemäß Patentanspruch 2 kann das Abschirmelement entweder zumindest auf einer, der zu dichtenden Fläche zugewandten Seite der Metalllage angeordnet sein oder zusätzlich an der Stirnseite der Metalllage. Aufgrund dieser Anordnung ist eine einfache fertigungstechnische Anbringung des Abschirmelementes an die Metalllage möglich.

Durch die Ausgestaltung gemäß Patentanspruch 3 wird das Abschirmelement von den abzudichtenden Gehäuseteilen beim Zusammenbau gequetscht, wodurch ein Eindringen von Elektrolyten in den Dichtspalt und somit eine Spaltkorrosion sicher vermieden ist.

Eine kostengünstige Dauerdichtheit wird mit einem Abschirmelement gemäß Patentanspruch 4 erzielt.

Mit den geometrischen Variabilitäten gemäß der Patentansprüche 5 und 6 kann einerseits das Fertigungsverfahren der Dichtung optimal abgestimmt werden und andererseits können die mechanischen Eigenschaften des Abschirmelementes bestmöglich an den zu dichtenden Spalt angepasst werden.

Die Anbringung des Abschirmelementes an die Metalllage ist gemäß Patentanspruch 7 in einfacher Weise durch Anspritzen oder mittels eines Siebdruckverfahrens möglich. Eine kostengünstige Fertigung, auch im Rahmen von Großserien ist somit realisierbar.

Die Ausgestaltung gemäß Patentanspruch 8 gestattet weitere geometrische Anpassungen zwischen den abzudichtenden Maschinengehäusen, insbesondere einem Kurbelgehäuse und einem Zylinderkopf, sowie der Dichtung selbst. So ist es beispielsweise möglich, die Dichtbereiche der Metalllagen auf ein Minimum zu reduzieren, während das Abschirmelement radial weiter entfernt angeordnet ist, um auch bei größeren Gehäusewandstärken die Spaltkorrosion sicher zu verhindern.

Im Folgenden ist eine erfindungsgemäß ausgestaltete Dichtung anhand eines bevorzugten Ausführungsbeispieles in einer einzigen Figur näher erläutert.

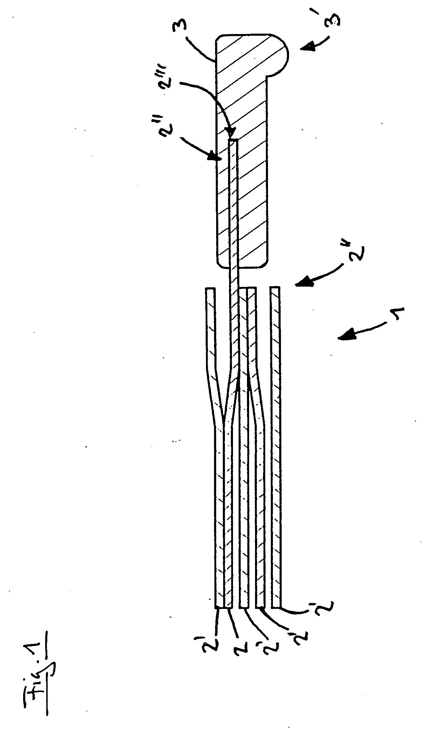

Fig. 1 zeigt eine Schnittdarstellung durch einen Randbereich einer erfindungsgemäß ausgestalteten Dichtung 1, insbesondere einer Zylinderkopfdichtung für Brennkraftmaschinen. Die Dichtung 1 besteht im Wesentlichen aus fünf Metalllagen 2, 2', die weitgehend parallel zueinander angeordnet sind. Die einzelnen Metalllagen 2, 2' liegen partiell flächig aufeinander und sind abschnittsweise durch Sicken von einander beabstandet. Aufgrund dieser geometrischen Ausgestaltung ist die Dichtung 1 ein senkrecht zu ihrer Hauptausdehnung federndes Element, wodurch eine erhöhte Dichtwirkung erzielt wird. Die in Einbaulage geodätisch zweite Metalllage 2 von oben, weist ein in radialer Ausdehnung größeres Maß auf als die vier restlichen Metalllagen 2'. Ein Randbereich 2" der Metalllage 2 ist von einem Abschirmelement 3 eingefasst. Das bedeutet, dass eine Stirnseite 2"' der Metalllage 2 sowie deren Ober- und Unterseite im Randbereich von dem Abschirmelement 3 bedeckt sind. Das Abschirmelement 3 weist wiederum an seinem radial äußeren Ende einen die Dichtung 1 überkragenden Bereich 3' mit einen Wulst 4 auf. Die Dicke von dem überkragenden Bereich 3' und dem Wulst 4 ist größer als die Einbaudicke der Dichtung 1. Das Abschirmelement 3 samt Wulst 4 umfassen den gesamten Umfang der Dichtung 1.

Die Metalllagen 2, 2' sind aus einem Chromnickelstahl-Federstahl hergestellt. Auch andere hochtemperaturfeste Federstahllegierungen sind für eine gattungsgemäße Dichtung einsetzbar. Das Abschirmelement 3 ist aus einem Elastomer, im vorliegenden Fall einem Silikonkautschuk und ist mittels einem Spritzgießverfahren an die Metalllage 2 angespritzt. Neben Silikonkautschuk können auch noch weitere temperaturfeste sowie säureresistente Elastomere wie beispielsweise Gummi verwendet werden. Der gegenüber der Metalllage 2 geodätisch oben liegende Abschnitt des Abschirmelementes 3 weist eine Dicke von ca. 0,5 mm auf, der geodätisch unten liegende Abschnitt von ca. 1,0 mm. Ferner überkragt das Abschirmelement 3 die Stirnseite 2"' der Metalllage 2 um etwa 5 mm. Der Wulst 4 weist eine Materialstärke von ca. 0,8 mm auf. Der überkragende Bereich 3' kann je nach Ausführung der Dichtung 1 zwischen 0,5 und 20 mm betragen. Die Materialstärke des Abschirmelementes 3 auf der Metalllage 2 kann zwischen 0,05 und 2 mm betragen. Die jeweilige Materialstärke richtet sich nach den vorliegenden Einbaubedingungen, sowie nach dem Herstellverfahren für das Abschirmelement 3. Dieses kann durch Siebdruck, oder wie im vorliegenden Fall, durch Spritzgießen an die Metalllage 2 angeformt werden. Das Abschirmelement 3 kann ferner an weiteren Metalllagen 2' oder an einer einzelnen Metalllage 2' angeformt werden.

Im vorliegenden Fall weist das Abschirmelement 3 einen stiefelförmigen Querschnitt auf, dessen Schaft den Randbereich 2' der Metalllage 2 umschließt. In weiteren Ausführungsvarianten kann der Querschnitt des Abschirmelementes 3 auch T-förmig, Y-förmig, oder nur einseitig an eine Metalllage 2, 2' angeordnet sein. Auch eine Anordnung ausschließlich an die Stirnseite 2"' einer Metalllage 2, 2' ist möglich. In diesem Fall ist auch eine lippenförmige Ausbildung des Abschirmelementes 3 möglich.

Die erfindungsgemäße Dichtung 1 findet vorzugsweise als Zylinderkopfdichtung Verwendung. Sie eignet sich insbesondere für ein Kurbelgehäuse aus einer Magnesiumlegierung in Verbindung mit einem Zylinderkopf aus Aluminium. Während die federnden Metalllagen 2, 2' die Dichtheit der Brennräume, Wasser- und Ölkanäle gewährleisten, dient das Abschirmelement 3 zur Verhinderung des Eindringens von Schmutz bzw. Elektrolyten in den Trennspalt zwischen Zylinderkopf und Kurbelgehäuse. Dies ist insbesondere für Magnesiumlegierungen wichtig, da Stahl und Magnesium unterschiedliche Elektronegativitäten aufweisen. Ein Elektrolyt zwischen einer Metalllage 2, 2' und der Magnesiumlegierung würde zur Korrosion des Magnesiums führen und dieses zerstören. Da das Abschirmelement 3 den Trennspalt zwischen Zylinderkopf und Kurbelgehäuse sicher abdichtet, ist mit der erfindungsgemäßen Dichtung 1 eine lange Lebensdauer eines Magnesium-Kurbelgehäuses gesichert. Damit zwischen den Metalllagen 2, 2' und der Magnesiumlegierung keine Kontaktkorrosion entsteht, ist die Dichtung 1 auf der der Magnesiumlegierung zugewandten Seite mit einem Isolator bedruckt. Dieser aufgedruckte Isolator kann beispielsweise eine Kunststoffbeschichtung sein, die mittels Siebdruck aufgetragen wird.

Im vorliegenden Ausführungsbeispiel besteht die Dichtung 1 aus fünf Metalllagen 2, 2', in anderen Ausführungsbeispielen können jedoch auch bis zu 10 Metalllagen 2, 2' benachbart zueinander angeordnet sein. Die minimale Anzahl von Metalllagen 2, 2' liegt bei zwei, um die o. g. Federwirkung nicht zu verlieren. Weiter können beispielsweise nur die Decklagen aus Federstahl sein, während die Zwischenlagen beispielsweise aus Edelstahl gebildet werden. Neben Edelstahl können z. B. bei Reparaturdichtungen auch Distanzlagen aus hochlegiertem Stahl eingesetzt werden. Die Isolationsschicht kann beispielsweise aus FPM sein, die auf den Außenflächen ganzflächig aufgebracht wird. Die Beschichtungsdicken können hierbei zwischen 0,002 und 0,5 mm variieren.

Mit der erfindungsgemäßen Dichtung 1, die insbesondere als Zylinderkopfdichtung ausgebildet ist, wird Spaltkorrosion dadurch vermieden, dass das um die Dichtung 1 umlaufende Abschirmelement 3 von Zylinderkopf und Zylinderkurbelgehäuse verpresst wird und somit das Eindringen von Elektrolyten in den Dichtspalt verhindert ist. Die Höhe des Querschnitts des Abschirmelementes 3 richtet sich nach der Summe der abzudichtenden Blechdicken, die maximale Dicke ergibt sich aus der Dicke der mittleren Metalllagen 2, 2' und der Decklagen samt einem Quetschaufmass. Die Vermeidung von einer Kontaktkorrosion zwischen der Magnesiumlegierung und einer Metalllage 2, 2' wird dadurch vermieden, dass die Decklage mit einem Isolator beschichtet ist.

### Bezugszeichenliste

- 1: Dichtung
- 2, 2': Metalllage
- 2": Randbereich
- 2"': Stirnseite
- 3: Abschirmelement
- 3': Überkragender Bereich
- 4: Wulst

## Patentansprüche

1. Dichtung (1), insbesondere eine Zylinderkopfdichtung für eine Brennkraftmaschine, bestehend aus zumindest zwei Metalllagen (2, 2') und einem, den radial außen liegenden Randbereich (2") einer Metalllage (2, 2') abschirmenden Abschirmelement (3),
**dadurch gekennzeichnet, dass**
das Abschirmelement (3) am Randbereich (2") zumindest einer Metalllage (2, 2') angeordnet ist.

2. Dichtung nach Patentanspruch 1,
**dadurch gekennzeichnet, dass** das Abschirmelement (3) zumindest auf einer, einer zu dichtenden Fläche zugewandten Seite der Metalllage (2, 2') und/oder einer Stirnseite (2"') der Metalllage (2, 2') angeordnet ist.

3. Dichtung nach Patentanspruch 1 oder 2,
**dadurch gekennzeichnet, dass** das Abschirmelement (3) an seinem radial die Metalllage überkragenden Bereich (3') eine größere Dicke aufweist als die Metalllage (2, 2').

4. Dichtung nach einem der Patentansprüche 1 bis 3,
**dadurch gekennzeichnet, dass** das Abschirmelement (3) aus einem Elastomer ist.

5. Dichtung nach einem der Patentansprüche 1 bis 4,
**dadurch gekennzeichnet, dass** das Abschirmelement (3) den Randbereich (2"') auf der, der zu dichtenden Fläche zugewandten Seite zwischen 0,5 und 20 mm überdeckt.

6. Dichtung nach Patentanspruch 5,
**dadurch gekennzeichnet, dass** das Abschirmelement (3) im überdeckenden Bereich eine Stärke zwischen 0,05 und 2 mm aufweist.

7. Dichtung nach einem der Patentansprüche 1 bis 6,
**dadurch gekennzeichnet, dass** das Abschirmelement (3) an die Metalllage (2) angespritzt oder mittels eines Siebdruckverfahrens aufgebracht ist.

8. Dichtung nach einem der Patentansprüche 1 bis 7,
**dadurch gekennzeichnet, dass** die Metalllage (2), an die das Abdeckelement (3) angeordnet ist, die andere Metalllage (2') zumindest abschnittsweise überkragt.
